# EUROPÄISCHE PATENTSCHRIFT

(11) **EP 3 507 739 B1**
(45) Veröffentlichungstag und Bekanntmachung des Hinweises auf die Patenterteilung: **10.07.2024**
(21) Anmeldenummer: 17748647.9
(22) Anmeldetag: 12.07.2017
(51) Int. Cl.: G06V 20/56, G05D 1/00, G06V 10/143, G06V 10/145, G06V 10/56

(54) **VERFAHREN ZUR SPURFÜHRUNG, SYSTEM ZUR SPURFÜHRUNG UND FAHRZEUG**
TRACK GUIDANCE METHOD, TRACK GUIDANCE SYSTEM, AND VEHICLE
PROCÉDÉ DE GUIDAGE SUR UNE VOIE ET SYSTÈME DE GUIDAGE D'UN VÉHICULE SUR UNE VOIE

(30) Priorität: 31.08.2016 DE 102016010485
(43) Veröffentlichungstag der Anmeldung: 10.07.2019
(73) Patentinhaber: SEW-EURODRIVE GmbH & Co. KG, 76646 Bruchsal (DE)
(72) Erfinder: KLUMPP, Daniel, gestorben (DE)
(86) Internationale Anmeldenummer: PCT/EP2017/025203
(87) Internationale Veröffentlichungsnummer: WO 2018/041407

(56) Entgegenhaltungen:
- EP-A2- 1 486 799
- WO-A1-2013/007955
- JP-A- 2000 029 516
- US-A- 5 118 191
- US-A1- 2008 055 896

## Beschreibung

Die Erfindung betrifft ein Verfahren zur Spurführung, ein System zur Spurführung und ein Fahrzeug.

Aus dem Stand der Technik sind optische Verfahren zur Spurführung bekannt.

Aus der DE 10 2007 023 157 A1 ist ein Roboter-Fahrzeug bekannt.

Aus der DE 195 16 369 A1 ist ein Transportsystem bekannt.

Aus der WO 2008 / 097 173 A1 ist ein automatisches Spurführungssystem bekannt.

**Aus der** JP 2000 029 516 A **ist als nächstliegender Stand der Technik ein Spurführungssystem bekannt.**

**Aus der** US 2008/055 896 A1 **ist ein System zur Konfigurierung der Farben eines LED Beleuchtungssystems bekannt.**

**Aus der** US 5 118 191 A **ist ein bei hohem Kontrast schaltbarer Zieldiskriminator bekannt.**

Der Erfindung liegt daher die Aufgabe zugrunde, ein Verfahren zur Spurführung, ein System zur Spurführung und ein Fahrzeug weiterzubilden, wobei die Sicherheit verbessert werden soll.

Erfindungsgemäß wird die Aufgabe bei dem Verfahren zur Spurführung nach den in Anspruch 1 angegebenen Merkmalen, bei dem System zur Spurführung nach den in Anspruch 4 angegebenen Merkmalen und bei dem Fahrzeug nach den in Anspruch 9 angegebenen Merkmalen gelöst.

Von Vorteil ist dabei, dass mittels der Beleuchtung mit Licht zweier verschiedenartiger Farben und anschließender Differenzbildung ein besserer Kontrast zur Bestimmung der Position der Spur erreicht wird. Die Intensität des von der Fahrbahn reflektierten Lichtes ist unabhängig von der Lichtfarbe im Wesentlichen identisch. Somit ist die Intensität des von der Spur reflektierten Lichtes nach der Differenzbildung deutlich zu erkennen. Das Signal-Rausch-Verhältnis ist verbessert.

**Erfindungsgemäß** wird in einem vierten Verfahrensschritt aus der Differenz der Intensitäten die Position der Spur relativ zum Fahrzeug bestimmt, wobei in einem fünften Verfahrensschritt die Fahrtrichtung des Fahrzeuges an die Erstreckungsrichtung der Spur angeglichen wird, insbesondere das Fahrzeug entlang der Spur geführt wird. Von Vorteil ist dabei, dass die Differenz der Intensitäten wenige Störsignale aufweist. Somit ist die Position der Spur relativ zum Fahrzeug sicher und eindeutig bestimmbar.

**Erfindungsgemäß** wird als Position der Spur relativ zum Fahrzeug das betragsmäßige Maximum der Differenz der Intensitäten gewählt. Von Vorteil ist dabei, dass die Position der Spur relativ zum Fahrzeug in einfacher Art und Weise eindeutig bestimmbar ist.

Bei einer vorteilhaften Ausgestaltung ist das erste Farbspektrum gleich der Farbe der Spur. Von Vorteil ist dabei, dass die Spur Licht ihrer eigenen Farbe am besten reflektiert. Es ist ein deutliches Maximum in der Intensität erkennbar.

Bei einer vorteilhaften Ausgestaltung ist das zweite Farbspektrum gleich der Komplementärfarbe der Spur. Von Vorteil ist dabei, dass die Spur Licht ihrer Komplementärfarbe am schlechtesten reflektiert. Es ist ein deutliches Minimum in der Intensität erkennbar.

**Erfindungsgemäß** ist eine weitere Spur auf der Fahrbahn angeordnet, die eine andere Farbe als die Spur aufweist, wobei als Position der Spur relativ zum Fahrzeug das betragsmäßige globale Maximum der Differenz der Intensitäten gewählt wird. Von Vorteil ist dabei, dass mehrere verschiedenfarbige Spuren auf der Fahrbahn anordenbar sind, die einander überlappend anordenbar sind. Die verschiedenfarbigen Spuren sind mittels des Verfahrens zur Spurführung eindeutig erkennbar.

Wichtige Merkmale bei dem System zur Spurführung entlang einer Spur auf einer Fahrbahn, insbesondere mittels eines Verfahrens zur Spurführung wie zuvor beschrieben beziehungsweise nach mindestens einem der auf das Verfahren zur Spurführung gerichteten Ansprüche, sind dass
das System ein Aufnahmemittel aufweist, in dem zumindest eine Lichtquelle und zumindest ein Lichtsensor, insbesondere eine Photodiode, aufgenommen sind,
wobei die Lichtquelle zumindest zwei verschiedenfarbige Leuchtdioden aufweist, wobei die Lichtquelle zur Erzeugung von Licht mit zumindest zwei verschiedenen Farben eingerichtet ist,
wobei die Lichtquelle und der Lichtsensor zur Fahrbahn und/oder der Spur ausgerichtet angeordnet sind, insbesondere so, dass die Fahrbahn und/oder die Spur mittels der Lichtquelle beleuchtbar ist und das von der Fahrbahn und/oder der Spur reflektierte Licht mittels des Lichtsensors detektierbar ist,
wobei die Spur und die Fahrbahn verschiedenfarbig sind.

Von Vorteil ist dabei, dass mittels der Leuchtdioden in einfacher Art und Weise verschiedene Lichtfarben durch Überlagerung der Farbspektren erzeugbar sind.

Vorteilhafterweise ist einem jeweiligen Lichtsensor genau eine jeweilige Lichtquelle zugeordnet. Dabei ist durch die Anordnung von Lichtsensor und Lichtquelle festgelegt, welcher Bereich der Fahrbahn und/oder der Spur relativ zum Aufnahmemittel beleuchtet ist. Das von dem Lichtsensor detektierte Licht ist somit eindeutig einer bestimmten Position relativ zum Aufnahmemittel zuordenbar.

**Erfindungsgemäß** weist die Lichtquelle drei verschiedenfarbige Leuchtdioden auf, insbesondere wobei eine Leuchtdiode grün ist und eine Leuchtdiode rot ist und eine Leuchtdiode blau ist, wobei das Licht der Lichtquelle eine Überlagerung des Lichtes der drei Leuchtdioden ist. Von Vorteil ist dabei, dass mittels der drei verschiedenfarbigen Leuchtdioden mittels Überlagerung des Lichtes eine Vielzahl von verschiedenen Lichtfarben erzeugbar ist.

Vorteilhafterweise ist das System zur Spurführung somit eingerichtet verschiedenen Spuren unterschiedlicher Farbe zu folgen. Dazu sind die Leuchtdioden lediglich anders anzusteuern.

**Erfindungsgemäß** sind in dem Aufnahmemittel zumindest drei Lichtquellen und zumindest drei Lichtsensoren angeordnet, wobei jeder Lichtquelle ein Lichtsensor zugeordnet ist, insbesondere wobei die jeweilige Lichtquelle und der jeweilige Lichtsensor derart angeordnet sind, dass der Lichtsensor einen Lichtstrahl, der von der ihm zugeordneten Lichtquelle abgestrahlt wird und von der Fahrbahn und/oder der Spur reflektiert wird, detektiert. Von Vorteil ist dabei, dass jedem Lichtsensor genau eine Lichtquelle zugeordnet ist. Dabei ist durch die Anordnung der Lichtsensoren und Lichtquellen festgelegt, welcher Bereich der Fahrbahn und/oder der Spur relativ zum Aufnahmemittel beleuchtet ist. Das von dem Lichtsensor detektierte Licht ist somit eindeutig einer bestimmten Position relativ zum Aufnahmemittel zuordenbar. Dadurch ist eine einfache Photodiode als Lichtsensor verwendbar, da die Ortsauflösung durch die Anordnung des Systems erreichbar ist. Eine Kamera, die Lichtsignale ortsabhängig aufnimmt, ist nicht erforderlich.

**Erfindungsgemäß** sind die Lichtquellen als Reihe angeordnet, wobei die Lichtsensoren als Reihe angeordnet sind, insbesondere wobei die Reihe der Lichtquellen sich parallel zu der Reihe der Lichtsensoren erstreckt. Von Vorteil ist dabei, dass das System zur Spurführung in der Erstreckungsrichtung der Reihen eine bessere Ortsauflösung als in allen anderen Richtungen aufweist.

**Erfindungsgemäß** erstreckt die Reihe der Lichtsensoren und/oder die Reihe der Lichtquellen sich quer zu der Erstreckungsrichtung der Spur. Von Vorteil ist dabei, dass eine Abweichung von der Spur detektierbar ist.

**Erfindungsgemäß** weist das System ein Auswertemittel auf, zur Bestimmung der Position der Spur relativ zu dem Aufnahmemittel aus den Signalen der Lichtsensoren. Von Vorteil ist dabei, dass das System eingerichtet ist die Signale der Lichtsensoren intern auszuwerten. Vorteilhafterweise ist das Auswertemittel im Aufnahmemittel angeordnet. Somit ist eine schnelle Auswertung der Signale möglich, da lange Übertragungszeiten an ein externes Auswertemittel vermieden werden.

Bei einer vorteilhaften Ausgestaltung ist eine weitere Spur auf der Fahrbahn angeordnet, wobei die weitere Spur und die Spur verschiedenfarbig sind, wobei das Auswertemittel eingerichtet ist, die Spur einer bestimmten Farbe zu erkennen, indem es die Intensität des von der Spur und/oder der Fahrbahn reflektierten Lichts bei Beleuchtung mit verschiedenfarbigem Licht auswertet. Von Vorteil ist dabei, dass mehrere verschiedenfarbige Spuren auf der Fahrbahn anordenbar sind, die einander überlappend anordenbar sind. Die verschiedenfarbigen Spuren sind mittels des Systems zur Spurführung eindeutig erkennbar.

Bei einer vorteilhaften Ausgestaltung weist das System ein Farbsteuerungsmittel auf, zur Steuerung der Farbe der Lichtquelle und/oder Lichtquellen. Von Vorteil ist dabei, dass die Farbe der jeweiligen Lichtquelle in einfacher Art und Weise wechselbar ist.

Bei einer vorteilhaften Ausgestaltung weist die Spur eine grellere Farbe auf als die Fahrbahn, insbesondere wobei die Spur rot oder gelb oder grün oder blau ist. Von Vorteil ist dabei, dass die Spur einen starken Kontrast zur Fahrbahn aufweist, so dass ein deutliches Signal der Spur detektierbar ist. Somit ist die Sicherheit verbessert.

Bei einer vorteilhaften Ausgestaltung weist die Fahrbahn eine gedecktere Farbe auf als die Spur, insbesondere wobei die Fahrbahn weiß oder grau oder schwarz ist. Von Vorteil ist dabei, dass die Spur einen starken Kontrast zur Fahrbahn aufweist, so dass ein deutliches Signal der Spur detektierbar ist. Somit ist die Sicherheit verbessert.

Wichtige Merkmale der Erfindung bei dem Fahrzeug, das mittels eines Systems zur Spurführung wie zuvor beschrieben beziehungsweise nach mindestens einem der auf das System zur Spurführung gerichteten Ansprüche steuerbar ist, sind, dass
ein Aufnahmemittel des Systems zur Spurführung an einem Fahrzeugboden des Fahrzeugs angeordnet ist,
wobei das Fahrzeug entlang einer Spur steuerbar ist mittels des Systems zur Spurführung,
insbesondere wobei die Fahrtrichtung des Fahrzeugs parallel zu der Erstreckungsrichtung der Spur ist.

Von Vorteil ist dabei, dass das Fahrzeug mittels des Systems zur Spurführung entlang verschiedenfarbiger Spuren steuerbar ist.

Die Erfindung wird nun anhand von Abbildungen näher erläutert:
In der Figur 1 ist ein erfindungsgemäßes System zur Spurführung in Frontalansicht gezeichnet.
Figur 2 zeigt das erfindungsgemäße System zur Spurführung in Draufsicht.
In Figur 3 ist das erfindungsmäße System zur Spurführung zu einem ersten Zeitpunkt und zu einem zweiten Zeitpunkt gezeigt.
Figur 4 zeigt die von dem erfindungsgemäßen System zur Spurführung gemessene Lichtintensität I in Abhängigkeit von der Position x eines Lichtsensors 5 des Systems zur Spurführung in einem Aufnahmemittel zum ersten Zeitpunkt t₁ (a) und zum zweiten Zeitpunkt t₂ (b), sowie die absolute Differenz dieser beiden Intensitäten (c).
Figur 5 zeigt die Lichtintensität I in Abhängigkeit von der Position x eines Lichtsensors aus dem Stand der Technik.

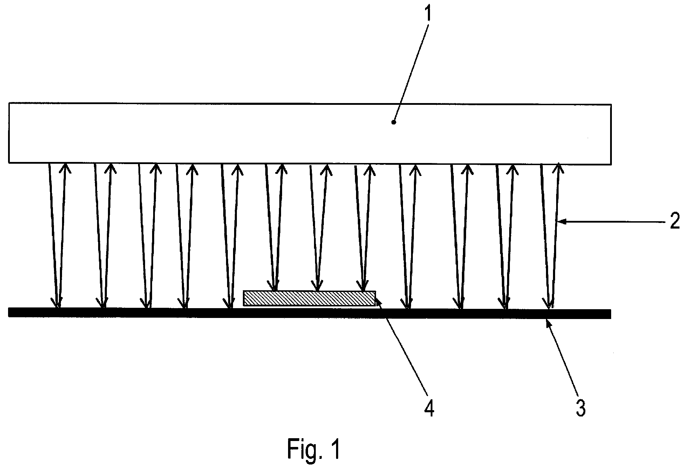

Figur 1 zeigt eine Spur 4, die auf einer Fahrbahn 3 angeordnet ist. Die Spur 4 weist eine andere Farbe, und/oder ein anderes Farbspektrum, als die Fahrbahn 3 auf. Vorteilhafterweise weist die Fahrbahn 3 eine gedeckte Farbe auf, insbesondere weiß oder grau oder schwarz. Vorteilhafterweise weist die Spur 4 eine grelle Farbe auf, insbesondere gelb oder rot oder grün oder blau.

Eine gedeckte Farbe ist eine gedämpfte, matte Farbe, die wenig kontrastreich ist, beispielsweise weiß oder grau oder schwarz.

Eine grelle Farbe ist eine auffallende, hervorstechende, kontrastreiche Farbe, beispielsweise gelb oder rot oder grün oder blau.

Vorzugsweise ist die Spur 4 als Kontraststreifen auf der Fahrbahn 3 ausgeführt.

Ein in den Figuren nicht dargestelltes Fahrzeug weist ein Aufnahmemittel 1 auf. In dem Aufnahmemittel 1 sind zumindest eine Lichtquelle 6, aufweisend drei Leuchtdioden, vorzugsweise in den Farben grün, rot und blau, und zumindest ein Lichtsensor 5, insbesondere eine Photodiode, aufgenommen.

Das Aufnahmemittel 1 ist am Fahrzeugboden des Fahrzeugs angeordnet und zur Fahrbahn 3 hin ausgerichtet. Ein jeweiliger Lichtstrahl 2 der jeweiligen Lichtquelle 6 wird von der Fahrbahn 3 und/oder der Spur 4 reflektiert und von dem Lichtsensor 5 detektiert.

In dem Aufnahmemittel 1 sind 1 mehrere Lichtquellen 6 und mehrere Lichtsensoren 5 aufgenommen, die jeweils in einer Reihe angeordnet sind. Die Reihe der Lichtquellen 6 und die Reihe der Lichtsensoren 5 sind parallel zueinander angeordnet. Dabei ist jeder Lichtquelle 6 ein Lichtsensor 5 zugeordnet. Die Lichtquellen 6 und Lichtsensoren 5 sind derart angeordnet, dass der Lichtstrahl 2 einer jeweiligen Lichtquelle 6 derart von der Fahrbahn 3 und/oder der Spur 4 reflektiert wird, dass der Lichtstrahl 2 von dem der jeweiligen Lichtquelle 6 zugeordneten Lichtsensor 5 detektiert wird. Dadurch ist die Position des Lichtsensors 5 eindeutig einer Position auf der Fahrbahn 3 und/oder der Spur 4 zuordenbar.

Das Aufnahmemittel 1 erstreckt sich in Querrichtung zur Fahrrichtung des Fahrzeuges und/oder in Querrichtung zur Erstreckungsrichtung der Spur 4.

Das erfindungsgemäße System zur Spurführung weist die Spur 4 auf der Fahrbahn 3, das Aufnahmemittel 1 mit der mindestens einen Lichtquelle 6 und dem mindestens einem Lichtsensor 5, ein Farbsteuerungsmittel und ein Auswertemittel auf.

Vorzugsweise weist jede Lichtquelle 6 jeweils drei Leuchtdioden auf, wobei eine erste Leuchtdiode rot ist, wobei eine zweite Leuchtdiode grün ist und wobei eine dritte Leuchtdiode blau ist. Der von der jeweiligen Lichtquelle 6 abgestrahlte Lichtstrahl 2 ist eine Überlagerung aus dem Licht der drei verschiedenfarbigen Leuchtdioden.

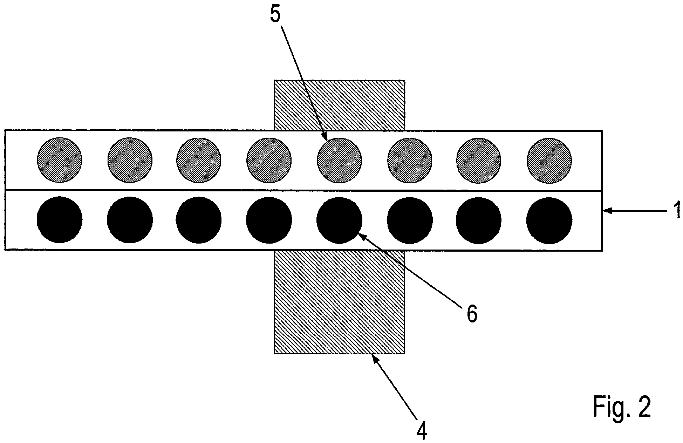

Figur 2 zeigt das Aufnahmemittel 1, in dem jeweils eine Reihe von Lichtquellen 6 und eine Reihe von Lichtsensoren 5 aufgenommen sind. Die Reihe von Lichtquellen 6 erstreckt sich parallel zu der Reihe von Lichtsensoren 5. Unterhalb des Aufnahmemittels 1 ist die Spur 4 dargestellt. Die Spur 4 erstreckt sich in Querrichtung zu den Reihen von Lichtquellen 6 beziehungsweise Lichtsensoren 5 weiter als in der Erstreckungsrichtung der Reihen.

Folgt das Aufnahmemittel 1 der Spur 4, so ist die Erstreckungsrichtung der Spur 4 die Bewegungsrichtung, insbesondere Fahrtrichtung 7, des Aufnahmemittels 1.

Die Lichtquellen 6 sind äquidistant in dem Aufnahmemittel 1 angeordnet. Die Lichtsensoren 5 sind äquidistant in dem Aufnahmemittel 1 angeordnet. Der Abstand zwischen zwei nächstbenachbarten Lichtsensoren 5 ist dabei genauso groß wie der Abstand zwischen zwei nächstbenachbarten Lichtquellen 6.

Vorzugsweise ist der Abstand zwischen einer Lichtquelle 6 und dem der Lichtquelle 6 zugeordneten Lichtsensor 5 kleiner als der Abstand zwischen der Lichtquelle 6 und der zu der Lichtquelle 6 nächstbenachbarten Lichtquelle 6.

Vorzugsweise ist der Abstand zwischen einer Lichtquelle 6 und dem der Lichtquelle 6 zugeordneten Lichtsensor 5 kleiner als der Abstand zwischen dem Lichtsensor 5 und dem zu dem Lichtsensor 5 nächstbenachbarten Lichtsensor 5.

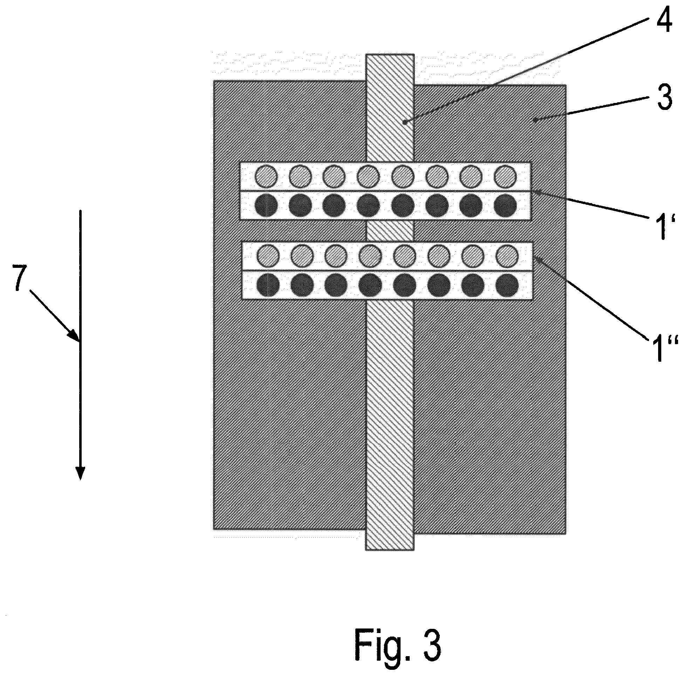

Figur 3 zeigt das Aufnahmemittel (1', 1 ") zu einem ersten Zeitpunkt t₁ und zu einem zweiten Zeitpunkt t₂ über der Fahrbahn 3 und der Spur 4. Dabei liegt der erste Zeitpunkt t₁ zeitlich vor dem zweiten Zeitpunkt t₂.

Zum ersten Zeitpunkt t₁ beleuchtet die Lichtquelle 6 die Fahrbahn 3 und/oder die Spur 4 mit einem ersten Farbspektrum, insbesondere wobei das erste Farbspektrum der Lichtquelle 6 die Farbe der Spur 4 enthält, insbesondere wobei die Lichtquelle 6 zum ersten Zeitpunkt t₁ in der Farbe der Spur 4 leuchtet.

Zum zweiten Zeitpunkt t₂ beleuchtet die Lichtquelle 6 die Fahrbahn 3 und/oder die Spur 4 mit einem zweiten Farbspektrum, insbesondere wobei das zweite Farbspektrum der Lichtquelle 6 die Farbe der Spur 4 nicht enthält, insbesondere wobei die Lichtquelle 6 zum zweiten Zeitpunkt t₂ in der Komplementärfarbe zu der Farbe der Spur 4 leuchtet.

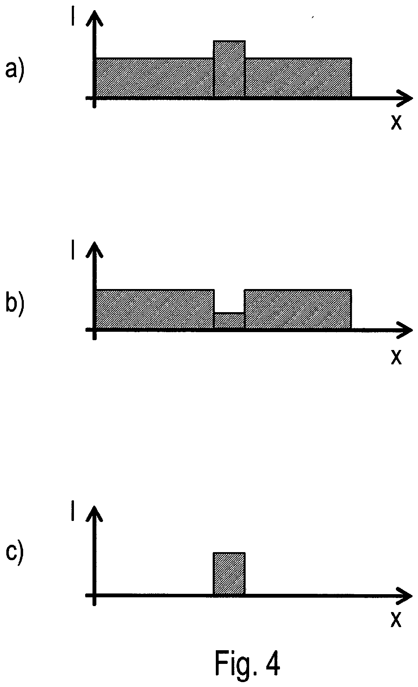

In Figur 4 a) ist die Intensität I des von der Fahrbahn 3 und der Spur 4 reflektierten Lichtes in Abhängigkeit von der Position x auf dem Aufnahmemittel 1 zum ersten Zeitpunkt t₁ dargestellt. Das Licht wird von der Spur 4 stärker reflektiert als von der Fahrbahn 3. Dies ist an der stufenartigen Zunahme und der stufenartigen Abnahme der Intensität in einem der Spur 4 zuordenbaren Positionsbereich erkennbar. Die Fahrbahn 3 reflektiert das Licht mit konstanter Intensität.

Figur 4 b) zeigt die Intensität I des von der Fahrbahn 3 und der Spur 4 reflektierten Lichtes in Abhängigkeit von der Position x auf dem Aufnahmemittel 1 zum zweiten Zeitpunkt t₂. Das Licht wird von der Spur 4 schwächer reflektiert als von der Fahrbahn 3. Dies ist an der stufenartigen Abnahme und der stufenartigen Zunahme der Intensität in einem der Spur 4 zuordenbaren Positionsbereich erkennbar.

Figur 4 c) zeigt die absolute Differenz der Intensitäten aus den Messungen zum ersten und zweiten Zeitpunkt (t₁, t₂) in Abhängigkeit von der Position x auf dem Aufnahmemittel 1. Da die Intensität des reflektierten Lichtes von der Fahrbahn 3 zum ersten und zweiten Zeitpunkt (t₁, t₂) nahezu identisch ist und die Intensitäten des reflektierten Lichtes von der Spur 4 sich zum ersten und zweiten Zeitpunkt deutlich unterscheiden, ist das Signal der Spur 4 in dieser Darstellung deutlich zu erkennen, insbesondere als Balken.

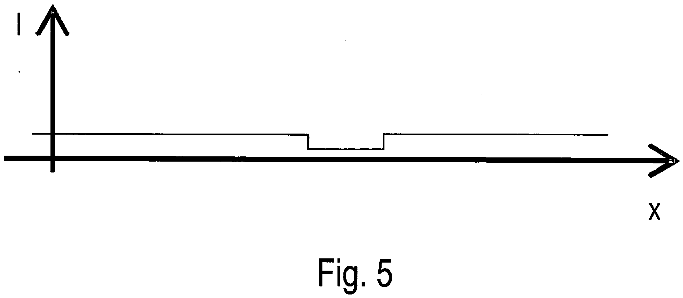

In Figur 5 ist zum Vergleich die Intensität I des reflektierten Lichtes in Abhängigkeit von der Position x bei Beleuchtung der Fahrbahn 3 und der Spur 4 mit weißem Licht gemäß Stand der Technik gezeigt. Im Vergleich zu der Figur 4 c) ist erkennbar, dass bei Bestrahlung mit weißem Licht der Unterschied zwischen der Intensität des von der Spur 4 reflektierten Lichtes und der Intensität des von der Fahrbahn 3 reflektierten Lichtes deutlich kleiner ist. Somit ist die Spurführung gemäß Stand der Technik anfällig für Messungenauigkeiten und Rauschen, die die Bestimmung der Position der Spur 4 erschweren.

In einem weiteren nicht dargestellten Ausführungsbeispiel sind auf der Fahrbahn 3 mehrere Spuren angeordnet, die verschiedene Farben aufweisen. Zur Auswahl der gewünschten Spur wird die Spur zum ersten Zeitpunkt t₁ mit Licht in der Farbe der Spur und zum zweiten Zeitpunkt t₂ mit Licht in der Komplementärfarbe der Spur beleuchtet und das Signal mit dem größten Intensitätsunterschied nach der Differenzberechnung der Intensitäten zur Spurführung verwendet.

Bei erfindungsgemäßen Ausführungsbeispielen wird zur Beleuchtung polarisiertes Licht verwendet und beim Erfassen ebenfalls ein Polarisationsfilter vorgeschaltet, so dass dabei die Intensität nur in der Polarisationsrichtung erfasst wird. Somit ist der Einfluss von Störquellen deutlich verminderbar.

Weiter bevorzugt sind Ausführungen, bei welchen die Farbe der Spur Licht polarisiert reflektiert, also zumindest mit einer ausgeprägten Polarisationsrichtung. Auf diese Weise ist die Spur noch besser erkennbar, wenn sie mit polarisiertem Licht angestrahlt wird. Das Fahrzeug ist somit auch in seinem Lenkwinkel schneller der Fahrbahnrichtung nachführbar, welche eine feste relative Ausrichtung zur Polarisationsrichtung hat. Beispielsweise ist die Polarisationsrichtung parallel zur Fahrbahn oder alternativ quer zur Fahrbahn gerichtet.

### Bezugszeichenliste

1 Aufnahmemittel
1' Aufnahmemittel zum Zeitpunkt t₁
1" Aufnahmemittel zum Zeitpunkt t₂
2 Lichtstrahl
3 Fahrbahn
4 Spur
5 Lichtsensor, insbesondere Photodiode
6 Lichtquelle, insbesondere Leuchtdiode
7 Fahrtrichtung

## Patentansprüche

1. Verfahren zur Spurführung für ein Fahrzeug entlang einer Spur (4) auf einer Fahrbahn (3), wobei die Spur (4) und die Fahrbahn (3) verschiedenartige Farben aufweisen,
aufweisend die zeitlich aufeinanderfolgenden Verfahrensschritte:
wobei in einem ersten Verfahrensschritt die Spur (4) und die Fahrbahn (3) mit einem ersten Farbspektrum beleuchtet werden, wobei das erste Farbspektrum die Farbe der Spur aufweist, und die Intensität des reflektierten Lichtes in Abhängigkeit von einer Position quer zu einer Erstreckungsrichtung der Spur (4) gemessen wird,
wobei in einem zweiten Verfahrensschritt die Spur (4) und die Fahrbahn (3) mit einem zweiten Farbspektrum beleuchtet werden und die Intensität des reflektierten Lichtes in Abhängigkeit von der Position quer zur Erstreckungsrichtung der Spur (4) gemessen wird, wobei das zweite Farbspektrum die Farbe der Spur (4) nicht aufweist,
wobei in einem dritten Verfahrensschritt die Differenz aus der im ersten Verfahrensschritt gemessenen Intensität und der im zweiten Verfahrensschritt gemessenen Intensität als Funktion der Position quer zur Erstreckungsrichtung der Spur (4) berechnet wird,
**wobei in einem vierten Verfahrensschritt aus der Differenz der Intensitäten die Position der Spur relativ zum Fahrzeug bestimmt wird,**
wobei in einem fünften Verfahrensschritt die Fahrtrichtung (7) des Fahrzeuges an die
Erstreckungsrichtung der Spur angeglichen wird, also das Fahrzeug entlang der Spur geführt wird,
**dadurch gekennzeichnet, dass**
**im ersten und zweiten Verfahrensschritt die Beleuchtung mit in einer ersten**
**Polarisationsrichtung polarisiertem Licht erfolgt,**
im ersten und zweiten Verfahrensschritt die Messung der beiden Lichtintensitäten in der ersten Polarisationsrichtung des reflektierten Lichts erfolgt,
**im dritten Verfahrensschritt die Differenz der Intensitäten zusätzlich einer Betragsbildung unterzogen** wird und **im vierten Verfahrensschritt als Position der Spur (4) relativ zum Fahrzeug das betragsmäßige Maximum der Differenz der Intensitäten gewählt wird.**

2. Verfahren zur Spurführung nach Anspruch 1,
**dadurch gekennzeichnet, dass**
das erste Farbspektrum gleich der Farbe der Spur (4) ist.

3. Verfahren zur Spurführung nach Anspruch 1 oder 2,
**dadurch gekennzeichnet, dass**
das zweite Farbspektrum gleich der Komplementärfarbe der Spur (4) ist.

4. System zur Spurführung **eines Fahrzeugs** entlang einer Spur (4) auf einer Fahrbahn (3) mittels eines Verfahrens nach mindestens einem der Ansprüche 1 bis 3,
**wobei das System das Fahrzeug, die Spur (4) und die Fahrbahn (3) aufweist sowie ein Aufnahmemittel (1), welches an einem Fahrzeugboden des Fahrzeugs angeordnet ist,**
**dadurch gekennzeichnet, dass**
das System **das** Aufnahmemittel (1) aufweist, in dem zumindest eine Lichtquelle (6) mit Polarisationsfilter und zumindest ein Lichtsensor (5), insbesondere eine Photodiode, mit weiterem Polarisationsfilter aufgenommen sind
wobei die Lichtquelle (6) drei verschiedenfarbige Leuchtdioden aufweist, wobei die Lichtquelle (6) zur Erzeugung von polarisiertem Licht mit drei verschiedenen Farben eingerichtet ist,
wobei die Lichtquelle (6) und der Lichtsensor (5) zur Fahrbahn (3) und der Spur (4) ausgerichtet angeordnet sind, so dass die Fahrbahn (3) die Spur (4) mittels der Lichtquelle (6) beleuchtbar sind und das von der Fahrbahn (3) und der Spur (4) reflektierte Licht mittels des Lichtsensors (5) detektierbar ist,
wobei die Spur (4) und die Fahrbahn (3) verschiedenfarbig sind,
**wobei das Licht der Lichtquelle (6) eine Überlagerung des Lichtes der drei Leuchtdioden ist,**
**wobei in dem Aufnahmemittel (1) zumindest drei Lichtquellen (6) und zumindest drei Lichtsensoren (5) angeordnet sind,**
**wobei jeder Lichtquelle (6) ein Lichtsensor (5) zugeordnet ist, insbesondere wobei die jeweilige Lichtquelle (6) und der jeweilige Lichtsensor (5) derart angeordnet sind, dass der Lichtsensor (5) einen Lichtstrahl (2), der von der ihm zugeordneten Lichtquelle (6) abgestrahlt wird und von der Fahrbahn (3) und/oder der Spur (4) reflektiert wird, detektiert,**
**wobei die Lichtquellen (6) als Reihe angeordnet sind,**
**wobei die Lichtsensoren (5) als Reihe angeordnet sind,**
**wobei die Reihe der Lichtquellen (6) sich parallel zu der Reihe der Lichtsensoren (5) erstreckt,**
**wobei die Reihe der Lichtsensoren (5) und/oder die Reihe der Lichtquellen (6) sich quer zu der Erstreckungsrichtung der Spur (4) erstreckt,**
**wobei das System ein Auswertemittel aufweist, welches zur Bestimmung der Position der Spur (4) relativ zu dem Aufnahmemittel (1) aus den Signalen der Lichtsensoren (5) eingerichtet ist.**

5. System zur Spurführung nach Anspruch 4,
**dadurch gekennzeichnet, dass**
**eine der Leuchtdioden grün ist, eine weitere der Leuchtdioden rot ist und die dritte der Leuchtdioden blau ist.**

6. System zur Spurführung nach Anspruch 4 bis 5,
**dadurch gekennzeichnet, dass**
eine weitere Spur auf der Fahrbahn angeordnet ist, wobei die weitere Spur und die Spur (4) verschiedenfarbig sind,
wobei das Auswertemittel eingerichtet ist, die Spur einer bestimmten Farbe zu erkennen, indem es die Intensität des von der Spur und/oder der Fahrbahn (3) reflektierten Lichts bei Beleuchtung mit verschiedenfarbigem Licht auswertet.

7. System zur Spurführung nach einem der Ansprüche 4 bis 6,
**dadurch gekennzeichnet, dass**
das System ein Farbsteuerungsmittel aufweist, zur Steuerung der Farbe der Lichtquelle und/oder Lichtquellen.

8. System zur Spurführung nach einem der Ansprüche 4 bis 7,
**dadurch gekennzeichnet, dass**
die Spur (4) eine grellere Farbe aufweist als die Fahrbahn (3), insbesondere wobei die Spur (4) rot oder gelb oder grün oder blau ist,
und/oder dass
die Fahrbahn (3) eine gedecktere Farbe aufweist als die Spur (4), insbesondere wobei die Fahrbahn (3) weiß oder grau oder schwarz ist,
und/oder dass
die Spur der Fahrbahn eine Farbe aufweist, die Licht derart reflektiert, dass das Licht eine bevorzugte Polarisationsrichtung aufweist, insbesondere unabhängig von der Fahrbahnposition.

9. Fahrzeug, das mittels eines Systems zur Spurführung nach mindestens einem der Ansprüche 4 bis 8 steuerbar ist,
**dadurch gekennzeichnet, dass**
ein Aufnahmemittel (1) des Systems zur Spurführung an einem Fahrzeugboden des Fahrzeugs angeordnet ist,
wobei das Fahrzeug entlang einer Spur (4) steuerbar ist mittels des Systems zur Spurführung, insbesondere wobei die Fahrtrichtung (7) des Fahrzeugs parallel zu der Erstreckungsrichtung der Spur (4) ist,
**wobei das Auswertemittel des Systems in dem Aufnahmemittel (1) angeordnet ist und somit Teil des Fahrzeugs ist.**

## Claims

1. A track guidance method for a vehicle along a track (4) on a carriageway (3),
wherein the track (4) and the carriageway (3) have different colours,
having the chronologically successive method steps:
wherein in a first method step, the track (4) and the carriageway (3) are illuminated with a first colour spectrum, wherein the first colour spectrum has the colour of the track, and the intensity of the reflected light dependent on a position transverse to an extension direction of the track (4) is measured,
wherein in a second method step, the track (4) and the carriageway (3) are illuminated with a second colour spectrum and the intensity of the reflected light dependent on the position transverse to the extension direction of the track (4) is measured, wherein the second colour spectrum does not have the colour of the track (4),
wherein in a third method step, the difference between the intensity measured in the first method step and the intensity measured in the second method step is calculated as a function of the position transverse to the extension direction of the track (4),
wherein in a fourth method step, the position of the track relative to the vehicle is determined from the difference in the intensities,
wherein in a fifth method step, the travel direction (7) of the vehicle is adapted to the extension direction of the track, therefore the vehicle is guided along the track,
**characterised in that**
in the first and second method step, the illumination takes place with light polarised in a first polarisation direction,
in the first and second method step, the measurement of both light intensities takes place in the first polarisation direction of the reflected light,
in the third method step, the difference in the intensities is additionally subjected to an absolute-value generation and
in the fourth method step, the maximum, in terms of magnitude, of the difference in the intensities is selected as position of the track (4) relative to the vehicle.

2. A track guidance method according to claim 1,
**characterised in that**
the first colour spectrum is the same as the colour of the track (4).

3. A track guidance method according to claim 1 or 2,
**characterised in that**
the second colour spectrum is the same as the complementary colour of the track (4).

4. A system for track guidance of a vehicle along a track (4) on a carriageway (3) by means of a method according to at least one of the claims 1 to 3,
wherein the system has the vehicle, the track (4) and the carriageway (3) as well as a receiving means (1) which is arranged on a vehicle floor of the vehicle,
**characterised in that**
the system has the receiving means (1) in which there are received at least one light source (6) with polarisation filter and at least one light sensor (5), in particular a photodiode, with further polarisation filter,
wherein the light source (6) has three different-coloured light-emitting diodes, wherein the light source (6) is configured for the generation of polarised light with three different colours, wherein the light source (6) and the light sensor (5) are arranged oriented towards the carriageway (3) and the track (4), so that the carriageway (3) and the track (4) can be illuminated by means of the light source (6) and the light reflected by the carriageway (3) and the track (4) can be detected by means of the light sensor (5), wherein the track (4) and the carriageway (3) are different coloured,
wherein the light of the light source (6) is a superimposition of the light of the three light-emitting diodes,
wherein at least three light sources (6) and at least three light sensors (5) are arranged in the receiving means (1),
wherein a light sensor (5) is associated with each light source (6), in particular wherein the respective light source (6) and the respective light sensor (5) are arranged in such a manner that the light sensor (5) detects a light beam (2) which is radiated by the light source (6) associated therewith and which is reflected by the carriageway (3) and/or the track (4),
wherein the light sources (6) are arranged as a row,
wherein the light sensors (5) are arranged as a row,
wherein the row of the light sources (6) extends parallel to the row of the light sensors (5),
wherein the row of the light sensors (5) and/or the row of the light sources (6) extend(s) transversely to the extension direction of the track (4),
wherein the system has an evaluation means which is configured to determine the position of the track (4) relative to the receiving means (1) from the signals of the light sensors (5).

5. A track guidance system according to claim 4,
**characterised in that**
one of the light-emitting diodes is green, another of the light-emitting diodes is red and the third of the light-emitting diodes is blue.

6. A track guidance system according to claim 4 to 5,
**characterised in that**
a further track is arranged on the carriageway, wherein the further track and the track (4) are different in colour,
wherein the evaluation means is configured to distinguish the track of a certain colour **in that** it evaluates the intensity of the light reflected by the track and/or the carriageway (3) upon illumination with different-coloured light.

7. A track guidance system according to any one of the claims 4 to 6,
**characterised in that**
the system has a colour control means for controlling the colour of the light source and/or light sources.

8. A track guidance system according to any one of the claims 4 to 7,
**characterised in that**
the track (4) has a brighter colour than the carriageway (3), in particular wherein the track (4) is red or yellow or green or blue,
and/or **in that**
the carriageway (3) has a more muted colour than the track (4), in particular wherein the carriageway (3) is white or grey or black,
and/or **in that**
the track of the carriageway has a colour which reflects light in such a manner that the light has a preferred polarisation direction, in particular independently of the carriageway position.

9. A vehicle which is controllable by means of a track guidance system according to at least one of the claims 4 to 8,
**characterised in that**
a receiving means (1) of the track guidance system is arranged on a vehicle floor of the vehicle,
wherein the vehicle is controllable along a track (4) by means of the track guidance system, in particular wherein the travel direction (7) of the vehicle is parallel to the extension direction of the track (4),
wherein the evaluation means of the system is arranged in the receiving means (1) and is consequently part of the vehicle.

## Revendications

1. Procédé dévolu au guidage d'un véhicule le long d'une voie (4), sur une chaussée (3),
laquelle voie (4) et laquelle chaussée (3) présentent des couleurs différentes,
comprenant les étapes opératoires se succédant dans le temps et consistant en ce que :
lors d'une première étape opératoire, la voie (4) et la chaussée (3) sont éclairées par un premier spectre de couleurs, sachant que ledit premier spectre de couleurs présente la couleur de la voie, et que l'intensité de la lumière réfléchie est mesurée en fonction d'un emplacement transversal par rapport à une direction de l'étendue de ladite voie (4),
lors d'une deuxième étape opératoire, la voie (4) et la chaussée (3) sont éclairées par un second spectre de couleurs, et l'intensité de la lumière réfléchie est mesurée en fonction dudit emplacement transversal par rapport à ladite direction de l'étendue de la voie (4), ledit second spectre de couleurs ne présentant pas la couleur de ladite voie (4),
lors d'une troisième étape opératoire, la différence, entre l'intensité mesurée au cours de la première étape opératoire et l'intensité mesurée au cours de la deuxième étape opératoire, est calculée en fonction dudit emplacement transversal par rapport à la direction de l'étendue de la voie (4),
lors d'une quatrième étape opératoire, l'emplacement de la voie, par rapport au véhicule, est déterminé sur la base de ladite différence entre les intensités,
lors d'une cinquième étape opératoire, la direction (7) du déplacement du véhicule est harmonisée avec la direction de l'étendue de la voie, ledit véhicule étant par conséquent guidé le long de ladite voie,
**caractérisé par le fait que**,
lors des première et deuxième étapes opératoires, l'éclairage s'opère à l'aide d'une lumière polarisée dans une première direction de polarisation,
lors desdites première et deuxième étapes opératoires, la mesure des deux intensités lumineuses s'opère dans la première direction de polarisation de la lumière réfléchie,
lors de la troisième étape opératoire, la différence entre les intensités fait additionnellement l'objet de la formation d'une valeur et
lors de la quatrième étape opératoire, la valeur maximale de ladite différence entre les intensités est sélectionnée en tant qu'emplacement de la voie (4) par rapport au véhicule.

2. Procédé de guidage sur voie, selon la revendication 1,
**caractérisé par le fait que**
le premier spectre de couleurs équivaut à la couleur de la voie (4).

3. Procédé de guidage sur voie, selon la revendication 1 ou 2,
**caractérisé par le fait que**
le second spectre de couleurs équivaut à la couleur complémentaire de la voie (4).

4. Système destiné au guidage d'un véhicule le long d'une voie (4) sur une chaussée (3), au moyen d'un procédé conforme à au moins l'une des revendications 1 à 3, ledit système incluant ledit véhicule, ladite voie (4) et ladite chaussée (3), ainsi qu'un moyen d'enregistrement (1) disposé sur un plancher dudit véhicule,
**caractérisé par le fait que**
ledit système est doté du moyen d'enregistrement (1) dans lequel sont intégrés au moins une source lumineuse (6) équipée d'un filtre de polarisation, et au moins un capteur de lumière (5), en particulier une photodiode équipée d'un autre filtre de polarisation,
ladite source lumineuse (6) étant pourvue de trois diodes électroluminescentes de couleurs différentes,
laquelle source lumineuse (6) est agencée pour engendrer une lumière polarisée présentant trois couleurs différentes,
sachant que la source lumineuse (6) et le capteur de lumière (5) sont disposés avec alignement par rapport à la chaussée (3) et à la voie (4), de façon telle que ladite chaussée (3) et ladite voie (4) puissent être éclairées au moyen de ladite source lumineuse (6) et que la lumière, réfléchie par ladite chaussée (3) et ladite voie (4), puisse être détectée au moyen dudit capteur de lumière (5),
sachant que ladite voie (4) et ladite chaussée (3) présentent des couleurs différentes,
sachant que la lumière de ladite source lumineuse (6) est une superposition de la lumière des trois diodes électroluminescentes,
sachant qu'au moins trois sources lumineuses (6) et au moins trois capteurs de lumière (5) sont intégrés dans le moyen d'enregistrement (1),
un capteur de lumière (5) étant alors associé à chaque source lumineuse (6), sachant notamment que la source lumineuse (6) considérée, et le capteur de lumière (5) respectif, sont disposés de telle manière que ledit capteur de lumière (5) détecte un faisceau lumineux (2) diffusé par la source lumineuse (6) qui lui est associée, et réfléchi par la chaussée (3) et/ou par la voie (4),
les sources lumineuses (6) étant agencées en tant que rangée,
les capteurs de lumière (5) étant agencés en tant que rangée,
sachant que la rangée desdites sources lumineuses (6) s'étend parallèlement à la rangée desdits capteurs de lumière (5),
ladite rangée des capteurs de lumière (5), et/ou ladite rangée des sources lumineuses (6), s'étendant transversalement par rapport à la direction de l'étendue de la voie (4),
sachant que ledit système est pourvu d'un moyen d'évaluation agencé en vue de déterminer, sur la base des signaux desdits capteurs de lumière (5), l'emplacement de ladite voie (4) par rapport au moyen d'enregistrement (1).

5. Système de guidage sur voie, selon la revendication 4,
**caractérisé par le fait que**
l'une des diodes électroluminescentes est verte, une autre est rouge, parmi lesdites diodes électroluminescentes, et la troisième desdites diodes électroluminescentes est bleue.

6. Système de guidage sur voie, selon les revendications 4 à 5,
**caractérisé par le fait**
**qu'**une voie supplémentaire est implantée sur la chaussée, ladite voie supplémentaire et la voie (4) présentant des couleurs différentes,
sachant que le moyen d'évaluation est agencé en vue de reconnaître la voie d'une couleur déterminée en évaluant l'intensité de la lumière réfléchie par la voie, et/ou par la chaussée (3), lors d'un éclairage par une lumière de couleur différente.

7. Système de guidage sur voie, selon l'une des revendications 4 à 6,
**caractérisé par le fait que**
ledit système est doté d'un moyen de commande de couleurs, en vue de commander la couleur de la source lumineuse et/ou des sources lumineuses.

8. Système de guidage sur voie, selon l'une des revendications 4 à 7,
**caractérisé par le fait que**
la voie (4) présente une couleur plus vive que celle de la chaussée (3), sachant notamment que ladite voie (4) est rouge ou jaune ou verte ou bleue ;
et/ou **par le fait que**
la chaussée (3) présente une couleur plus sourde que celle de la voie (4), sachant notamment que ladite chaussée (3) est blanche ou grise ou noire ;
et/ou **par le fait que**
la voie de la chaussée présente une couleur réfléchissant de la lumière, de façon telle que ladite lumière présente une direction de polarisation préférentielle, en particulier de manière indépendante de l'emplacement de ladite chaussée.

9. Véhicule apte à la commande au moyen d'un système de guidage sur voie conforme à au moins l'une des revendications 4 à 8,
**caractérisé par le fait**
**qu'**un moyen d'enregistrement (1) du système de guidage sur voie est disposé sur un plancher du véhicule,
lequel véhicule peut être commandé le long d'une voie (4) au moyen dudit système de guidage sur voie, sachant notamment que la direction (7) du déplacement dudit véhicule est parallèle à la direction de l'étendue de ladite voie (4),
le moyen d'évaluation dudit système étant intégré dans ledit moyen d'enregistrement (1) et faisant, de ce fait, partie intégrante dudit véhicule.
